# EUROPÄISCHE PATENTSCHRIFT

(11) **EP 3 018 398 B1**
(45) Veröffentlichungstag und Bekanntmachung des Hinweises auf die Patenterteilung: **20.11.2019**
(21) Anmeldenummer: 15002967.6
(22) Anmeldetag: 19.10.2015
(51) Int. Cl.: F16L 59/065, F16L 59/02, B32B 3/04

(54) **VAKUUMISOLATIONSPANEEL**
VACUUM INSULATION PANEL
PANNEAU D'ISOLATION SOUS VIDE

(30) Priorität: 06.11.2014 DE 202014008767 U
(43) Veröffentlichungstag der Anmeldung: 11.05.2016
(73) Patentinhaber: va-Q-tec AG, 97080 Würzburg (DE)
(72) Erfinder: Fuchs, Dominik, 97222 Rimpar (DE); Bock, Tobias, 97080 Würzburg (DE); Taraschewski, Thomas, 97080 Würzburg (DE); Caps, Roland, 63839 Kleinwallstadt (DE)
(74) Vertreter: Von Rohr Patentanwälte Partnerschaft mbB

(56) Entgegenhaltungen:
- WO-A1-03/072684
- DE-A1- 10 123 453
- DE-A1-102009 054 432
- DE-A1-102010 019 074
- DE-U1-202004 015 843

## Beschreibung

Die Erfindung betrifft ein Vakuumisolationspaneel mit den Merkmalen des Oberbegriffs von Anspruch 1.

Vakuumisolationspaneele sind plattenförmige Wärmeisolationselemente, die in verschiedenen Ausführungsformen bekannt sind (siehe Wikipedia "Vakuumdämmplatte", Abruf vom 03.11.2014; DE 10 2010 019 074 A1). In welcher Konstruktionsweise ein Vakuumisolationspaneel ausgebildet ist, ist für die vorliegende Erfindung grundsätzlich beliebig. Vorzugsweise sollte das Vakuumisolationspaneel jedoch so ausgebildet sein, dass es jedenfalls in begrenztem Maße biegbar ist.

Regelmäßig hat ein Vakuumisolationspaneel einen Grundkörper aus einem offenporigen Werkstoff, der dem Vakuumisolationspaneel die erforderliche mechanische Stabilität gibt. Seine Offenporigkeit gewährleistet eine ausreichende Evakuierbarkeit dieses Grundkörpers. Der Grundkörper ist mit einer möglichst vollständig gasdichten Folie, einer sog. "Hochbarrierefolie", gasdicht umschlossen. Der von der Folie gebildete, durch den Grundkörper ausgefüllte Innenraum ist evakuiert, wodurch die gewünschten Wärmeisolationseigenschaften erreicht werden.

Typischerweise hat also ein plattenförmiges Vakuumisolationspaneel zwei einander gegenüberliegende Außenflächen. Diese sind über schmale umlaufende Ränder miteinander verbunden.

Bei dem aus der Praxis bekannten Vakuumisolationspaneel, von dem die Erfindung ausgeht, ist das Vakuumisolationspaneel auf einer Außenfläche vollflächig mit einer mechanisch dichten Schutzschicht versehen, die die gegen mechanische Beschädigungen empfindliche Oberfläche des Vakuumisolationspaneels aus der besagten Hochbarrierefolie gegen mechanische Beaufschlagung selbst mit scharfkantigen Werkzeugen wie einem Messer oder einem Cutter schützt. Das aus der Praxis bekannte Beispiel eines Vakuumisolationspaneels hat auf der besagten Außenfläche eine Schutzfolie aus PVC aufgeklebt. Es gibt aber auch andere Schutzschichten, die eine ähnliche mechanische Schutzwirkung erfüllen. Beispielsweise kann man die Schutzschicht auch durch einen Schutzanstrich erreichen oder dadurch, dass man das Vakuumisolationspaneel auf dieser Außenfläche mit einer in einer Form angegossenen Schutzschicht, beispielsweise aus PU, versieht.

Vakuumisolationspaneele der zuvor beschriebenen, auf einer Außenfläche oder zumindest auf dem größten Teil der Außenfläche mit einer in bestimmter Weise ausgestalteten Schutzschicht versehenen Art sind für einen ganz bestimmten Einsatzzweck einsetzbar. Für einen anderen Einsatzzweck muss man ein anderes Vakuumisolationspaneel wählen. Aus dem Dokument WO 03/072684 A1 ist ein Vakuumisolationspaneel bekannt, bei dem zwei unterschiedliche Schutzschichten auf den zwei gegenüberliegenden Außenflächen vorhanden sein können.

Der Lehre der vorliegenden Erfindung liegt die Aufgabe zugrunde, das bekannte Vakuumisolationspaneel, das auf einer Außenfläche vollflächig mit einer mechanisch dichten Schutzschicht versehen ist, so auszugestalten und weiterzubilden, dass es universeller als bisher eingesetzt werden kann.

Das zuvor aufgezeigte Problem ist bei einem Vakuumisolationspaneel mit den Merkmalen des Oberbegriffs von Anspruch 1 durch die Merkmale des kennzeichnenden Teils von Anspruch 1 gelöst.

Erfindungsgemäß ist vorgesehen, dass das Vakuumisolationspaneel auch auf der gegenüberliegenden, zweiten Außenfläche vollflächig oder zumindest auf dem größten Teil mit einer Schutzschicht versehen ist und dass die zweite Schutzschicht als nicht mechanisch dichte, jedoch elastisch polsternde Schutzschicht ausgeführt ist.

Das Vakuumisolationspaneel ist also auf der der ersten Außenfläche gegenüberliegenden zweiten Außenfläche mit einer anders ausgestalteten Schutzschicht versehen. Damit hat das Vakuumisolationspaneel mit Hilfe der an der zweiten Außenfläche vollflächig oder zumindest auf dem größten Teil vorgesehenen zweiten Schutzschicht die Voraussetzungen für einen anders gearteten Anwendungsfall. Hier geht es nicht um einen Schutz gegen mechanische Beaufschlagung mit scharfkantigen Werkzeugen, sondern an dieser zweiten Außenfläche ist die Schutzschicht so ausgestaltet, dass sie eine Polsterungsfunktion erfüllt. Die Schutzschicht ist also relativ dick und hat aufgrund der Wahl von Material und Ausgestaltung eine erhebliche Elastizität. Damit ist diese Schutzschicht beispielsweise besonders geeignet, Unebenheiten in einer Oberfläche, an die das Vakuumisolationspaneel angepresst wird, auszugleichen. Beispielsweise wird das Vakuumisolationspaneel mit Hilfe dieser elastisch polsternden Schutzschicht vor scharfkantigen Schweißpickeln, die sich auf der Außenseite eines im Schweißverfahren aus mehreren Teilen hergestellten Behälters unvermeidbar finden, geschützt.

Besonders bevorzugt ist es, wenn die zweite Schutzschicht aus einem für Temperaturen bis zu 120°C widerstandsfähigen Material besteht. Damit kann man beispielsweise ein Vakuumisolationspaneel gemäß der Erfindung an einem Warmwasserspeicher anbringen.

Für die Auswahl des Werkstoffes für die zweite Schutzschicht wird nach der Erfindung empfohlen, dass die zweite Schutzschicht als aufkaschierte, insbesondere aufgeklebte, dicke Schicht aus PE-Schaum oder aus einem Zellkautschuk ausgeführt ist. Zellkautschuk ist in verschiedenen Ausführungsformen bekannt. Besonders zweckmäßig ist ein EPDM (Ethylen-Propylen-DienKautschuk). Hat man eine Schutzschicht aus PE-Schaum, so wird man mit einer Dicke von 2 mm bis 5 mm, vorzugsweise von ca. 3 mm arbeiten. Bei EPDM hingegen wird man mit etwas geringerer Dicke auskommen, wenn man eine vergleichbare elastische Federwirkung erreichen will, hier reicht eine Dicke von etwa 1 mm bis 3 mm, vorzugsweise von ca. 2 mm.

Für die erste Schutzschicht, die aus PVC ausgeführt ist, empfiehlt sich nach der Erfindung eine Dicke von 0,2 mm bis 1,0 mm, vorzugsweise von ca. 0,3 mm.
Das erfindungsgemäße Vakuumisolationspaneel ist also im Ergebnis auf beiden einander gegenüberliegenden Außenflächen mit jeweils einer Schutzschicht geschützt, die dort jeweils aufkaschiert ist. Die beiden Schutzschichten haben aber gezielt unterschiedliche Eigenschaften, um das Vakuumisolationspaneel universell einsetzen zu können.

Auch die Ränder des Vakuumisolationspaneels haben natürlich die gegen Beschädigungen empfindliche Hochbarrierefolie. Die ohnehin vorhandenen Schutzschichten kann man demzufolge auch zum Schutz der Ränder nutzen, indem man mindestens eine Schutzschicht bis auf mindestens zwei einander gegenüberliegenden Ränder des Vakuumisolationspaneels herumzieht.

Besonders bevorzugt ist das Vakuumisolationspaneel insgesamt biegbar. Vorzugsweise kann es auch bereits von vornherein kreisbogenförmig gebogen mit einem an den späteren Einsatzzweck angepassten Biegeradius ausgeführt sein.

Im Folgenden wird die Erfindung anhand einer lediglich ein Ausführungsbeispiel darstellenden Zeichnung näher erläutert. In der Zeichnung zeigt
- Fig. 1: in einer perspektivischen Darstellung ein Vakuumisolationspaneel für sich und
- Fig. 2: in einer Fig. 1 entsprechenden Darstellung das Vakuumisolationspaneel aus Fig. 1, nunmehr auf beiden einander gegenüberliegenden Außenflächen mit jeweils einer Schutzschicht kaschiert.

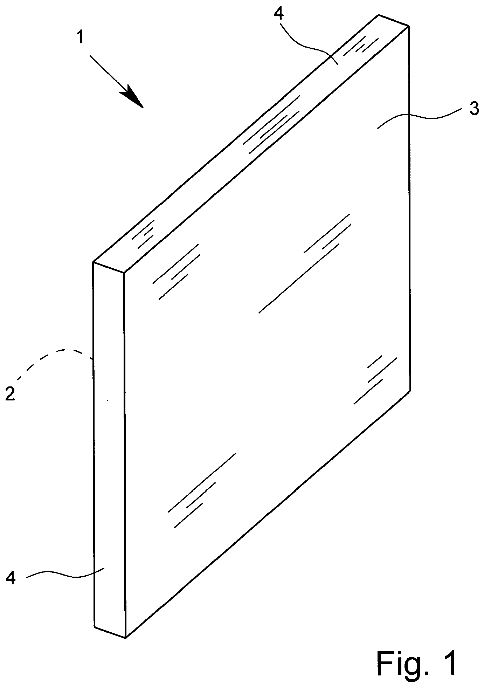

Fig. 1 zeigt das Vakuumisolationspaneel 1, von dem die Erfindung ausgeht. Es sollte vorzugsweise jedenfalls mit begrenztem Radius biegbar sein. Dieses Vakuumisolationspaneel 1 hat zwei einander gegenüberliegende Außenflächen 2, 3 und diese Außenflächen 2, 3 verbindende Ränder 4. All das ergibt sich aus Fig. 1.

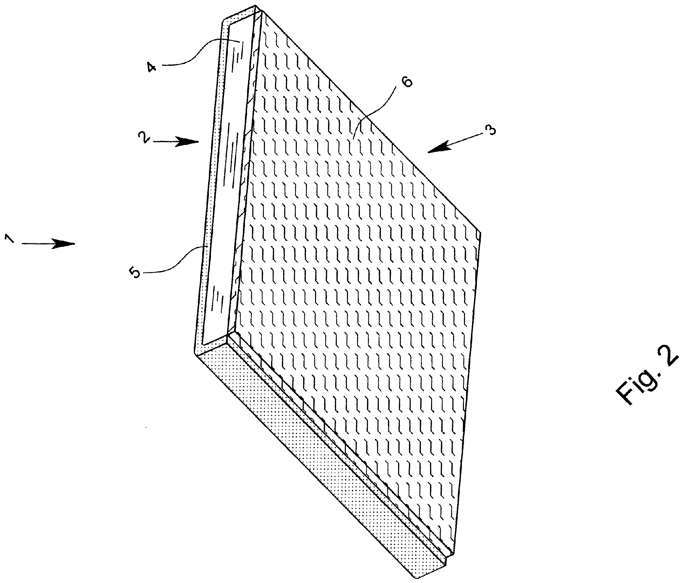

Fig. 2 zeigt nun die erfindungsgemäße Ausstattung des Vakuumisolationspaneels 1. Zunächst ist vorgesehen, dass das Vakuumisolationspaneel 1 auf seiner ersten, in Fig. 2 rückwärtigen Außenfläche 2 vollflächig mit einer mechanisch dichten Schutzschicht 5 versehen ist. Diese Schutzschicht 5 ist so ausgestaltet, dass sie gegen mechanische Beaufschlagung mit scharfkantigen Werkzeugen wie beispielsweise einem Messer oder einem Cutter jedenfalls in erheblichem Maße schützt.

Nach der Erfindung ist vorgesehen, dass die erste Schutzschicht 5 als aufkaschierte, insbesondere aufgeklebte, Schutzfolie aus Kunststoff ausgeführt ist. Für eine solche Kunststofffolie eignet sich nach der Erfindung PVC (Polyvinylchlorid). Werkstoffe mit ähnlichen mechanisch relevanten Eigenschaften, welche Werkstoffe jedoch nicht im Rahmen der Erfindung liegen, sind auch die Kunststoffe PP, PE, PET, uvm., aber auch Materialien wie z.B. Karton, die hier ebenfalls Verwendung finden können, ggf. in Kombination mit einem Kunststoff.

Fig. 2 zeigt nun ferner, dass das Vakuumisolationspaneel 1 auch auf der gegenüberliegenden zweiten Außenfläche 3, die in Fig. 2 vorne liegt, vollflächig mit einer Schutzschicht 6 versehen ist. Die zweite Schutzschicht 6 ist als nicht mechanisch dichte, jedoch umso besser elastisch polsternde Schutzschicht 6 ausgeführt. Sie hat deswegen andere Eigenschaften als die erste Schutzschicht 5. Deshalb lässt sich das Vakuumisolationspaneel 1 gemäß der Erfindung universell einsetzen.

Die zweite Schutzschicht 6 ist bevorzugt und im dargestellten Ausführungsbeispiel so ausgeführt, dass sie aus einem für Temperaturen bis zu 120°C widerstandsfähigen Material besteht.

Nach der Erfindung empfiehlt es sich, dass die zweite Schutzschicht 6 als aufkaschierte, insbesondere aufgeklebte, dicke Schicht aus Schaumkunststoff ausgeführt ist. Als Schaumkunststoff kommen nach der Erfindung PE (Polyethylen) oder ein Zellkautschuk, insbesondere EPDM (Ethylen-Propylen-Dien-Kautschuk) in Frage.

Für die erste Schutzschicht 5 empfiehlt sich eine Dicke von etwa 0,3 mm, wenn sie aus PVC besteht.

Für die zweite Schutzschicht 6 empfiehlt sich eine Dicke von 3 mm, wenn sie aus PE-Schaum besteht und es empfiehlt sich eine Dicke von 2 mm, wenn sie aus EPDM besteht.

Das in Fig. 2 dargestellte Ausführungsbeispiel zeigt ferner, dass hier zwei einander gegenüberliegende Ränder 4 des Vakuumisolationspaneels 1 ebenfalls durch die erste Schutzschicht 5 abgedeckt sind, so dass auch dort die Hochbarrierefolie gegen mechanische Beaufschlagung mit scharfkantigen Werkzeugen geschützt ist.

### Bezugszeichenliste:

- 1: Vakuumisolationspaneel
- 2: erste Außenfläche
- 3: zweite Außenfläche
- 4: Rand
- 5: erste Schutzschicht
- 6: zweite Schutzschicht

## Patentansprüche

1. Vakuumisolationspaneel,
mit zwei einander gegenüberliegenden Außenflächen (2; 3) und diese Außenflächen (2; 3) verbindenden Rändern (4),
wobei das Vakuumisolationspaneel (1) auf einer Außenfläche (2) vollflächig oder zumindest auf dem größten Teil mit einer mechanisch dichten ersten Schutzschicht (5) versehen ist, die gegen mechanische Beaufschlagung mit scharfkantigen Werkzeugen wie beispielsweise einem Messer oder einem Cutter schützt,
**dadurch gekennzeichnet,**
**dass** die erste Schutzschicht (5) als aufkaschierte Schutzfolie aus PVC mit einer Dicke von 0,2 mm bis 1,0 mm ausgeführt ist,
**dass** das Vakuumisolationspaneel (1) auch auf der gegenüberliegenden zweiten Außenfläche (3) vollflächig oder zumindest auf dem größten Teil mit einer Schutzschicht (6) versehen ist, welche als nicht mechanisch dichte, jedoch elastisch polsternde zweite Schutzschicht (6) ausgeführt ist, dass die zweite Schutzschicht (6) als aufkaschierte Schicht aus PE-Schaum mit einer Dicke von 2 mm bis 5 mm oder aus einem Zellkautschuk, insbesondere aus EPDM, mit einer Dicke von 1 mm bis 3 mm ausgeführt ist.

2. Vakuumisolationspaneel nach Anspruch 1, **dadurch gekennzeichnet,**
**dass** die erste Schutzschicht (5) und/oder die zweite Schutzschicht (5) aufgeklebt sind.

3. Vakuumisolationspaneel nach Anspruch 1 oder 2, **dadurch gekennzeichnet, dass** die erste Schutzschicht (5) eine Dicke von 0,3 mm aufweist.

4. Vakuumisolationspaneel nach einem der Ansprüche 1 bis 3, **dadurch gekennzeichnet,**
**dass** die zweite Schutzschicht (6) bei Ausführung aus PE-Schaum eine Dicke von 3 mm und bei Ausführung aus einem Zellkautschuk, insbesondere aus EPDM, eine Dicke von 2 mm aufweist.

5. Vakuumisolationspaneel nach einem der Ansprüche 1 bis 4, **dadurch gekennzeichnet,**
**dass** mindestens zwei einander gegenüberliegende Ränder (4) des Vakuumisolationspaneels (1) ebenfalls durch eine der beiden Schutzschichten (5; 6) abgedeckt sind.

6. Vakuumisolationspaneel nach einem der Ansprüche 1 bis 5, **dadurch gekennzeichnet,**
**dass** das Vakuumisolationspaneel insgesamt biegbar und vorzugsweise kreisbogenförmig gebogen ausgeführt ist.

## Claims

1. Vacuum insulation panel,
with two outer surfaces (2; 3) lying opposite one another and edges (4) joining these outer surfaces (2; 3),
wherein the vacuum insulation panel (1) is provided over the full area or at least over the greater part of one outer surface (2) with a mechanically dense first protective layer (5), which protects against mechanical impact with sharp-edged tools, such as for example a knife or a cutter,
**characterized**
**in that** the first protective layer (5) is designed as a laminated-on protective film of PVC with a thickness of 0.2 mm to 1.0 mm,
**in that** the vacuum insulation panel (1) is also provided over the full area or at least over the greater part of the opposite second outer surface (3) with a protective layer (6), which is designed as a non-mechanically dense, but elastically cushioning second protective layer (6),
**in that** the second protective layer (6) is designed as a laminated-on layer of PE foam with a thickness of 2 mm to 5 mm or of a cellular rubber, in particular of EPDM, with a thickness of 1 mm to 3 mm.

2. Vacuum insulation panel according to Claim 1, **characterized in that** the first protective layer (5) and/or the second protective layer (5) are adhesively attached.

3. Vacuum insulation panel according to Claim 1 or 2, **characterized in that** the first protective layer (5) has a thickness of 0.3 mm.

4. Vacuum insulation panel according to one of Claims 1 to 3,
**characterized**
**in that** the second protective layer (6), when made of PE foam, has a thickness of 3 mm and, when made of a cellular rubber, in particular of EPDM, has a thickness of 2 mm.

5. Vacuum insulation panel according to one of Claims 1 to 4,
**characterized**
**in that** at least two edges (4) of the vacuum insulation panel (1) that are opposite one another are likewise covered by one of the two protective layers (5; 6).

6. Vacuum insulation panel according to one of Claims 1 to 5,
**characterized**
**in that** the vacuum insulation panel as a whole is bendable and is preferably designed as bent in the form of a circular arc.

## Revendications

1. Panneau d'isolation sous vide,
avec deux faces extérieures (2; 3) opposées l'une à l'autre et des bords (4) reliant ces faces extérieures (2; 3),
dans lequel le panneau d'isolation sous vide (1) est doté sur une face extérieure (2), sur toute la surface ou au moins sur la plus grande partie, d'une première couche de protection mécaniquement dense (5), qui le protège contre une agression mécanique à l'aide d'objets tranchants, comme par exemple un couteau ou un cutter,
**caractérisé en ce que**
la première couche de protection (5) est réalisée sous la forme d'un film de protection contrecollé en PVC d'une épaisseur de 0,2 mm à 1,0 mm,
le panneau d'isolation sous vide (1) est doté également sur la deuxième face extérieure opposée (3), sur toute la surface ou au moins sur la plus grande partie, d'une couche de protection (6), qui est réalisée sous la forme d'une deuxième couche de protection, non mécaniquement dense mais élastiquement capitonnée (6),
la deuxième couche de protection (6) est réalisée sous la forme d'une couche contrecollée en mousse de PE d'une épaisseur de 2 mm à 5 mm ou en un caoutchouc cellulaire, en particulier en EPDM, d'une épaisseur de 1 mm à 3 mm.

2. Panneau d'isolation sous vide selon la revendication 1, **caractérisé en ce que** la première couche de protection (5) et/ou la deuxième couche de protection (5) sont collées.

3. Panneau d'isolation sous vide selon une revendication 1 ou 2, **caractérisé en ce que** la première couche de protection (5) présente une épaisseur de 0,3 mm.

4. Panneau d'isolation sous vide selon l'une quelconque des revendications 1 à 3, **caractérisé en ce que** la deuxième couche de protection (6), quand elle est réalisée en mousse de PE, présente une épaisseur de 3 mm et, quand elle est réalisée en un caoutchouc cellulaire, en particulier en EPDM, une épaisseur de 2 mm.

5. Panneau d'isolation sous vide selon l'une quelconque des revendications 1 à 4, **caractérisé en ce qu'**au moins deux bords (4) opposés l'un à l'autre du panneau d'isolation sous vide (1) sont également recouverts d'une des deux couches de protection (5, 6).

6. Panneau d'isolation sous vide selon l'une quelconque des revendications 1 à 5, **caractérisé en ce que** le panneau d'isolation sous vide est globalement flexible et est de préférence cintré en forme d'arc de cercle.
